# EUROPEAN PATENT SPECIFICATION

(11) **EP 2 822 726 B1**
(45) Date of publication and mention of the grant of the patent: **22.05.2019**
(21) Application number: 12889603.2
(22) Date of filing: 05.12.2012
(51) Int. Cl.: B23K 1/00, B23K 1/19, B23K 1/005, B23K 9/23, B23K 35/30, B23K 9/04, B23K 26/32, B23K 35/02, B23K 35/22, C21D 9/50, C22F 1/10, F01D 5/00, B23K 26/342, B23K 101/00, B23K 103/02, B23K 103/18

(54) **METHOD OF CLADDING AND FUSION WELDING OF SUPERALLOYS USING COMPOSITE FILLER POWDER**
VERFAHREN ZUM UMHÜLLEN UND SCHMELZSCHWEISSEN VON SUPERLEGIERUNGEN UNTER VERWENDUNG EINES FÜLLPULVERS
PROCÉDÉ DE RECHARGEMENT ET DE SOUDAGE PAR FUSION DE SUPERALLIAGES AU MOYEN D'UNE POUDRE D'APPORT COMPOSITE

(43) Date of publication of application: 14.01.2015
(73) Proprietor: LIBURDI ENGINEERING LIMITED, Dundas, Ontario L9H 7K4 (CA)
(72) Inventor: GONCHAROV, Alexander B., Toronto, Ontario M2M 1C4 (CA); LIBURDI, Joseph, Dundas, Ontario L9H 5E4 (CA); LOWDEN, Paul, Cambridge, Ontario N3C 1N3 (CA); HASTIE, Scott, Toronto, Ontario M6G 3L1 (CA)
(74) Representative: Spengler, Robert
(86) International application number: PCT/CA2012/001118
(87) International publication number: WO 2014/085892

(56) References cited:
- EP-A2- 2 055 424
- WO-A1-93/22097
- WO-A2-2012/065581
- US-A- 4 381 944
- US-A1- 2003 136 811
- US-A1- 2006 249 231
- US-A1- 2007 272 332
- US-A1- 2010 196 193
- US-B1- 6 454 885
- US-B1- 6 872 912
- US-B2- 6 998 568

## Description

### Field of the Invention

The invention relates to fusion welding and filler materials for fusion welding and can be used for manufacturing and repair of turbine engine components made of nickel, cobalt and iron based superalloys utilizing gas tungsten arc welding (GTAW), laser beam (LBW), electron beam (EBW), plasma (PAW) and micro plasma (MPW) manual and automatic welding.

### Background of the Invention

The present invention is related to fusion welding and can be used for joining, manufacturing and repair of articles, especially turbine engine components, manufactured of conventional polycrystalline, single crystal and directionally solidified superalloys utilizing fusion welding processes.

Document US 2003/0136811 A1 discloses a method for the manufacturing or repair of a superalloy gas turbine component including a liquid phase diffusion bonding process wherein the brazing heat treatment used for the diffusion bonding of a powder material to the component is accomplished by a heat cycle that is performed on the component for another purpose. A manufacturing solution heat treatment, a pre-weld heat treatment, a post-weld heat treatment, or a rejuvenating heat treatment may be used as the brazing heat treatment. The composition of the powder material is selected so that a desired set of material properties is achieved when the powder material is subjected to the dual-purpose heat cycle.

In fusion welding, coalescence or joining between two or more articles takes place by melting of a base material with or without introduction of a filler material, followed by cooling and crystallization of a welding pool. Fusion welding can produce properties equal to those of the base material in wide range of temperatures and conditions. However, accommodation of solidification and residual stresses often results in cracking of difficult to weld Inconel 713, Inconel 738, Rene 77, CMSX-4, Rene N4 and other superalloys with low ductility.

Brazing can produce crack free joints because it does not require melting of a base material to obtain coalescence. Brazing is carried out by melting and solidification of only brazing materials. However, the mechanical properties of brazed joints are usually below the mechanical properties of the base material by 50-75% at high temperature.

The poor mechanical properties of brazed joints produced by most nickel and cobalt brazing materials do not allow extensive dimensional restoration of turbine blades and other engine components.

Therefore, despite the propensity for cracking, welding is used more often than brazing for manufacturing and repair of different articles including turbine engine components.

For example, repair of turbine blades as per WO 2009012747 is made by removing of a damaged portion of a blade followed by rebuilding of the removed portion by a weld buildup using LBW also known as cladding with a powder filler material.

The method disclosed in EU 102004002551 comprises removing of damaged material, laser powder deposition to the repair area and machining to obtain the required profile.

A similar method is described in US Patent 6,269,540. It comprises cladding using a laser beam that is moved relative to a repair surface and filler material that is supplied to the surface in such a way that the laser beam melts a thin layer of the metal substrate and filler material forming a fused metal on a surface of the blade. This process is repeated until a desired blade section is fully restored.

Low ductility turbine blades manufactured of nickel and cobalt based precipitation hardening and directionally solidified superalloys are highly susceptible to cracking during welding and heat treatment.

Therefore, to avoid cracking during fusion welding turbine blades manufactured of materials having a low ductility are preheated prior to welding to a temperature between 1800°F (982° C) to 2100° F (1148° C) as per US 5,897,801. Welding is accomplished by striking an arc in the preselected area so as to locally melt the parent material providing a filler metal having the same composition as the nickel-based superalloy of the article, and feeding the filler metal into the arc that results in melting and fusion of the latter with the parent material forming a weld deposit upon solidification.

A similar approach of welding at a high temperature is utilized in the method disclosed in US 6,659,332. The article is repaired by removing of damaged material, which is present in the defective area, followed by preheating of the article to a temperature of 60 - 98% of the solidus temperature of the base material in a chamber containing a protective gas.

In order to minimise welding stress in the blade due to the application of considerable thermal energy during fusion welding processes, blades are subjected to controlled heating prior to and controlling cooling after weld repair in accordance with the method described in CA 1207137.

Preheating of turbine blades increases the cost of a repair and does not guaranty crack free welds due to the low ductility of components produced using precipitation hardening superalloys.

The direct metal laser sintering process as per US 2010221567 comprises the steps of applying of a cladding material with a melting temperature that is below the melting temperature of the substrate at least to a portion of the article and heating the cladding material to a temperature that exceeds the liquidus temperature allowing wetting of the surface and formation of a solid compound during subsequent cooling and solidification. To prevent oxidation, this process is carried out in vacuum or protective atmosphere. This method was based on a high temperature brazing processes described in US 6,454,885, US 6,383,312, US 6,454,885, US 8,123,105, US6872912 B1 and other prior art and therefore, has similar short comings.

The major disadvantage of this method is a full re-melting of braze clad welds during post weld solution or rejuvenation heat treatment that changes the geometry of the weld beads limiting the size of repair areas to one single pass.

Additionally, as it was found by experiments in as welded condition welds produced using Ni and Co based brazing materials with high contents of melting point depressants such as B and Si are prone to extensive cracking and, therefore, are not suitable for use in the 'as welded' condition.

Previous attempts to produce crack free welds on Inconel 738 using standard filler materials were not successful in accordance with Banerjee K., Richards N.L., and Chaturvedi M.C. "Effect of Filler Alloys on Heat Affected Zone Cracking in Pre-weld Heat Treated IN-738 LC Gas-Tungsten-Arc Welds", Metallurgical and Materials Transactions, Volume 36A, July 2005, pp.1881 - 1890.

To verify results above within the scope of the current development the evaluation of the weldability of Inconel 738 using standard homogenous welding materials that include standard AMS 5786 (Hastelloy W) and AMS 5798 (Hastelloy X) nickel based welding wires which comprise numerous alloying elements including Si with a bulk content of 0.2 - 1 wt. %, Haynes HR-160 nickel based welding wire with bulk content of silicon of 2.75 wt. %., nickel based alloys with a content of Si from 0.05 wt. % to 2 wt. % similar to the material described in US 2,515,185, and more complex nickel based superalloy that comprises up to 0.05 wt.% B and 2.0 wt.% Re as per US 6,468,367 was conducted.

Regardless of the chemical composition all welds produced using standard welding materials at an ambient temperature exhibited extensive intergranular micro cracking in the HAZ (heat affected zone) along the fusion line between the base material and weld beads.

HAZ cracking in Inconel 738 was related to an incipient melting of low temperature eutectics, carbides and other precipitations along grain boundaries during welding followed by a propagation of cracks due to high level of residual tensile stresses into the HAZ. Lack of low temperature eutectics and rapid cooling did not allow full crack back filling during welding as was shown by Alexandrov B.T., Hope A.T., Sowards J.W., Lippold J.C., and McCracken S.S, in the publication titled: Weldability Studies of High-Cr, Ni-base Filler Metals for Power Generation Applications, Welding in the World, Vol. 55, n. 3/4, pp. 65 - 76, 2011 (Doc. IIW-2111, ex Doc. IX-2313 -09).

The post weld heat treatment (PWHT) of these welds resulted in an additional strain-aging cracking in the HAZ. Some cracks propagated into the welds.

Therefore, currently only preheating to temperatures exceeding 900° C allows crack free welding on Inconel 738, Inconel 713, GDT 111, GDT 222, Mar M247 and other precipitation hardening polycrystalline and directionally solidified high gamma-prime superalloys, as well as Mar M 247, CMSX 4, CMSX 10, Rene N5 and other single crystal materials.

However, preheating of turbine engine components prior to welding increases the cost and reduces the productivity of welding operations.

Therefore, one of major objectives of the present invention is the development of a new cost effective method for welding and cladding on polycrystalline, directionally solidified and single crystal superalloys at an ambient temperature that will allow self healing of cracks during welding and post weld heat treatment.

Additionally it is another objective to develop parameters for a post weld heat treatment (PWHT) for the self healing of cracks during a PWHT.

### Brief Description of the Invention

The method of cladding and fusion welding includes the steps of an application of a composite filler powder containing 5-50% brazing powder and 50-95% high temperature welding powder to a base material and simultaneously heating the base material and a composite filler powder by a local welding heat source. The filler powder is heated to a temperature that will fully melt the brazing powder and at least partially melt the high temperature welding powder and also a surface layer of the base material producing a heterogeneous or homogeneous welding pool depending on welding parameters followed by a subsequent solidification and cooling of a weld pool forming a heterogeneous weld bead comprising of a continuous interconnected framework of high temperature dendrites and interdendritic eutectics matrix. This matrix, together with a post weld heat treatment at a temperature exceeding the solidus temperature of the brazing powder but below of the solidus temperature of the base material allows self healing of cracks by capillary forces, while the weld bead geometry is supported by the continuous interconnected framework of dendrites produced by the high temperature welding powder. The method of cladding and fusion welding also includes steps of an application of a composite filler powder containing 5-50% brazing powder and 50-95% high temperature welding powder to a base material and simultaneously heating the base material and a composite filler powder by a local welding heat source. The filler powder is heated to a temperature that fully melts the brazing powder and at least partially melts the high temperature welding powder and also a surface layer of the base material producing a heterogeneous or homogeneous welding pool depending on welding parameters. A solidification of homogeneous welding pool results in a formation of a heterogeneous weld bead comprising of a continuous interconnected framework of high temperature dendrites and interdendritic eutectic matrix. This matrix, together with a post weld heat treatment at a temperature exceeding the solidus temperature of the brazing powder but below of the solidus temperature of the base material allows at least a partial melting of the eutectic matrix and self healing of cracks by capillary forces, while the weld bead geometry is supported by the continuous interconnected framework of dendrites produced by the high temperature welding powder.

The article repaired using the preferable embodiment comprises an originally manufactured defect free base material with a damaged area being removed prior to a repair and replaced with the composite weld material comprising of a continuous framework of a high temperature dendrites produced during solidification of a welding pool and a braze based matrix containing melting point depressants.

To ensure required chemical composition and microstructure of welds the welding pool during welding is heated to a temperature exceeding the melting temperature of the brazing powder but below approximately 1.2 times the melting temperature of the high temperature welding powder using one or more passes depending on the required size of the weld build up.

In accordance with other preferable embodiments the crack healing or thermal treatment is made by local heating of the weld bead using a welding source. As per another embodiment the post weld heat treatment of the article at a temperature below the solidus temperature of the brazing powder but above 500° C allowing at least a partial stress relief of the base material.

As per another embodiment to ensure crack healing a post weld heat treatment is made within a solidus liquidus range of a weld bead material but below the solidus temperature of the high temperature welding powder.

Welding results in the accumulation of residual stresses that aggravate cracking. To reduce residual stresses the stress relief or annealing should be performed. Annealing and crack healing heat treatment reduces mechanical properties of a base material. Therefore, further embodiments of the current invention based on performance requirements of base materials and service conditions may include annealing, aging or combination of annealing followed by aging.

Aiming to reduce distortion, residual stresses and cracking in accordance with another embodiment the post weld heat treatment is made after application of 2 - 10 weld passes. Welding as per the preferable embodiment is made either using premixed brazing and welding powders with the required ratio using one powder hopper or mixing these powders during heating with welding sources using two separate powder hoppers. The welding sources are selected among laser, electron beam, electric arc or plasma.

Due to improve weldability depending on chemical composition and condition of the base material, the article prior to welding is subjected to a stress relief, aging or annealing heat treatment.

In accordance with the preferable embodiment crack free welds are produced for example when the ratio of the welding pool length to the welding speed is 0.002 - 0.02.

Repair of an article by welding can be made at an ambient temperature without preheating of the base material or with the preheating of the article to a required temperature using similar welding powder with approximately the same chemical composition as the base material, or with a dissimilar welding powder with a different composition as the base material and brazing powders which include from 1 to 10 wt. % of Si or from 0.2 to 4 wt.% of B or mixture of Si and B as a melting temperature depressants from 1.2 to 10 wt.% with a total content of B not more than 4 wt.%

In other preferable embodiments the composite welding materials includes high temperature welding powder and brazing powder is used to produce a buttering pass followed by welding using a high temperature welding powder to produce a weld build up with the required geometry.

The invented method can be used for joining of at least two articles, manufacturing, repair and dimensional restoration of structural components, casings, nozzle guide vanes, compressor and turbine blades manufactured of polycrystalline, directionally solidified, single crystal and composite materials.

The following advantages were observed:
This method has been found to produce crack free welds at ambient temperature on most polycrystalline, directionally solidified and single crystal superalloys with a high content of gamma-prime phase and carbon, reducing the cost, increasing productivity and improving the health and safety of the work conditions.

The method results in formation of a heterogeneous composite weld bead structure consisting of a continuous framework of a high temperature and high strength dendrites and a ductile matrix that produces joints and weld metals with mechanical properties exceeding properties of brazed and classical homogenous welds made using standard solution hardening filler materials.

The formation of the heterogeneous composite structure in welds produced using optimized welding parameters occurs despite the melting of brazing and welding powders and base material within the same welding pool.

Welds deposited by this method exhibit self healing of cracks during a post weld heat treatment eliminating necessity of costly rework.

They also exhibit superior oxidation resistance that exceeds the oxidation resistance of base and high temperature welding materials.

Advantageously there is also a wide window of optimal welding parameters that simplify process control.

The present concept is a method of cladding and fusion welding of superalloys comprises the steps of:
a) application of a composite filler powder that comprises 5-50% by weight brazing powder which includes melting point depressants which includes boron in the amount of 0.2 to 4 wt%, and 50-95% by weight high temperature welding powder, to a superalloy base material;
b) simultaneous heating of the base material and the composite filler powder by a welding heat source that is movable relative to the base material, to a temperature that will fully melt the brazing powder and at least partially melt the high temperature welding powder and also melt a surface layer of the base material, thereby forming a weld pool;
c) cooling of the welding pool with a sufficient speed such that upon solidification and cooling, a composite structure that comprises an interconnected framework of high melting temperature columnar dendrites produced by the high temperature welding powder and an interdendritic eutectic matrix in the weld bead is formed by the brazing powder and the welding powder and the base material, accompanied formation of coalescence between a weld bead and the base material, and
d) post weld heat treatment at a temperature exceeding a solidus temperature of the brazing powder and below a solidus temperature of the high temperature welding powder, that results in at least a partial re-melting of the eutectic that is adapted to self healing by filling of cracks up to 0.8 mm in width and up to 20 mm in length, in the weld bead and the base material by capillary action followed by cooling and consolidation of the weld bead.

Preferably wherein the method of welding is applied to an article consisting of the base material, and further includes the step selected from among, joining articles together, cladding the article for dimensional restoration, manufacturing the article and repair of the article.

Preferably wherein the post weld heat treatment is made at a temperature below the solidus temperature of the brazing powder but above 500° C such that at least a partial stress relief of the weld bead and the base material occurs.

Preferably wherein the post weld heat treatment is made locally by a heating of the weld bead by the welding heat source.

### BRIEF DISCRIPTION DRAWINGS

FIGURE 1 is the micrograph of cross (a) and longitudinal (b) sections of Mar M247 - AWS A5.8 BNi-9 clad welds produced on Inconel 738 using micro plasma welding after heat treatment.

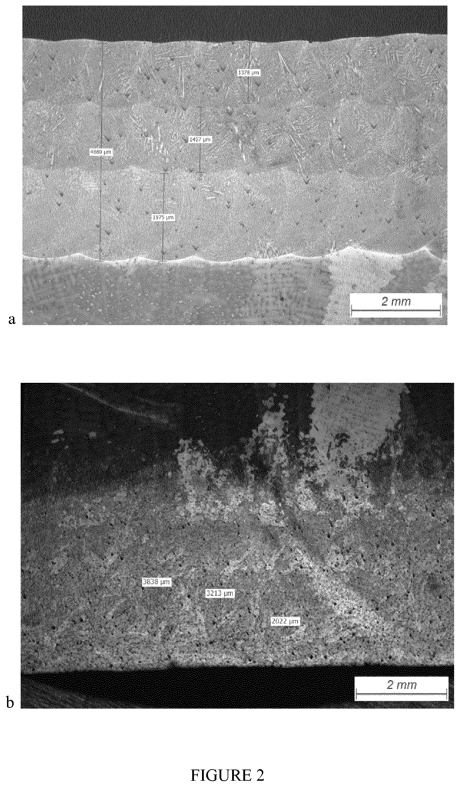

FIGURE 2 is the typical macrostructure of three pass laser beam clad weld (LBW) made on Inconel 738 with Inconel 738 - AWS A5.8 BNi-9 filler material, wherein (a) - longitudinal samples in as welded condition, (b) - longitudinal samples after heat treatment (b).
FIGURE 3 depicts the microstructure of the crack healing in the HAZ prior to a heat treatment (a) and macro structure of the three passes clad weld after PWHT at 1200° C (b).
FIGURE 4 is the macrostructure of the clad weld metal produced on Inconel 738 using Inconel 738 - AWS A5.8 BNi-9 filler powder in as welded condition (a) and after heat treatment (b).
FIGURE 5 depicts the macrostructure of the laser clad weld (a) and HAZ (b) produced on Inconel 738 using Inconel 738-AMS4782 filler powder after heat treatment.

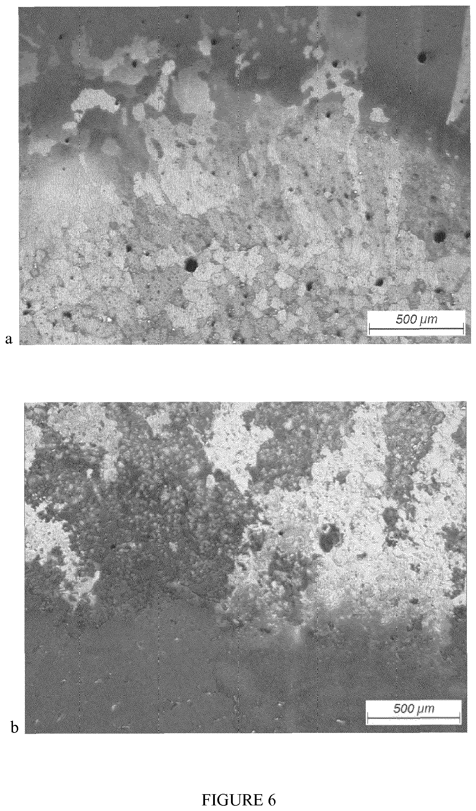

FIGURE 6 is a microstructure of the multi pass clad weld build up using Mar M247 - AWS A5.8 BNi-9 filler powder for a buttering pass and Rene 80 for the top pass, wherein (a) - fusion area between Mar M247 - AWS BNi-9 and Rene 80 clad weld on the top, (b) - heat affect zone (HAZ) that depicts the eutectic area.
FIGURE 7 depicts a multi pass weld build up produced using Inconel 738 - AWS A5.8 BNi-9 filler material.
FIGURE 8 is a repaired turbine blade with the micrograph depicting the defect free base material (1), repaired section of the blade produced by the multi pass clad welding (2) and eutectic layer (3) in the HAZ that bonds the repair sections (2) to the base material (1).

### DETAILED DESCRIPTION OF THE INVENTION

### TERMS AND DEFINITIONS

**Composite filler powder (material)** - the material to be added in making of welded joints or clad welds comprised mix of dissimilar high temperature welding and brazing powders with different chemical composition, solidification range and properties.

**Welding powder** - the welding material in a form of powder that is added in making of welded joints or clad welds.

**High temperature welding powder** - welding powder with a solidus temperature above 1200° C and below the melting temperature of tungsten of 3422° C.

**Brazing powder** - brazing material in a form of powder to be added in making of brazed joints with a melting temperature above 400° C but below of a melting temperature of a base material and high temperature welding powder.

**Base material or metal** - metal or alloy of the article or component to be welded.

**Cladding** - the process of the application of a relatively thick layer (> 0.5 mm (0.02 in.)) of welding material and/or composite welding powder for the purpose of improved wear and/or corrosion resistance or other properties and/or to restore the part to required dimensions with minimum penetration into the base material.

**Multi pass cladding** - cladding with two or more consecutive passes of welding material and/or composite welding powder.
**Gas tungsten arc welding = GTAW**
**Laser beam welding = LBW**
**Electron beam welding = EBW**
**Plasma arc welding = PAW**
**Oxy fuel welding = OAW**
**Post weld heat treatment = PWHT**

**Molten weld pool** - a liquid or semi liquid state of a weld pool prior to solidification as weld metal.

**Weld bead** - a weld deposit resulting from a solidification of a welding material and/or composite welding powder during weld and/or clad pass.

**Similar welding material** - a welding material that have the same chemical composition as a base material.

**Dissimilar welding material** - a welding material with a chemical composition different from a base material.

**Heat-affected zone (HAZ)** - that portion of the base metal which has not been melted, but whose mechanical properties or microstructure have been altered by the heat of welding, cladding, brazing, soldering, or cutting.

**Homogeneous weld bead** - a weld bead consisting of similar grains, dendrites and phases with similar chemical composition, solidification range and physical properties.

**Heterogeneous weld bead** - a weld bead consisting of grains, phases and precipitates with different chemical compositions, solidus - liquidus or solidification ranges and physical properties.

**Partial re-melt of a weld bead** - heat the composite welding bead to a temperature that exceeds a solidification temperature of the brazing powder but below of a solidification temperature of the high temperature welding powder.

**Eutectic matrix** - alloy that is formed during a metallurgical interaction of the brazing powder and the high temperature welding powder at a temperature that is below of a solidus temperature of dendrites in the composite weld bead.

**Composite weld bead** - alloy produced by welding or cladding and comprised at least two constituent, which are dendrites and eutectics, with different solidification range and properties.

**Melting point depressant** - a chemical element or elements that reduce the melting temperature of metals and alloys sometimes resulting in the formation of eutectics and an increase in the solidus - liquidus range also known as solidification range.

**Solidus temperature** - the highest temperature at which a metal or alloy is completely solid.

**Liquidus temperature** - the lowest temperature at which all metal or alloy is liquid.

**Solidus** - **liquidus range or temperature** - the temperature region between the solidus and liquidus wherein the metal or alloy is in a partially solid and partially liquid condition.

**Weld penetration** - the minimum depth a weld extends from its face into a base material or joint, exclusive of reinforcement.

**Discontinuity** - an interruption of the typical structure of a weld bead (metal), such as lack of homogeneity in the mechanical, metallurgical, or physical characteristics of the material or weld bead.

**Weld defect** - a discontinuity or discontinuities which by nature or accumulated effect (for example, total crack length) render a part or product unable to meet minimum applicable acceptance standards or specifications.

**Crack** - a fracture-type discontinuity that is characterized by a sharp tip and high ratio of length to width, usually exceeding three (3).

**Fissure** - a small crack-like discontinuity with only slight separation (opening displacement) of the fracture surfaces. The prefixes macro - or micro - indicate relative size.

**Heterogeneous welding pool** - is a molten or semi molten weld pool wherein liquefied dissimilar brazing, welding and base materials coexist with a non-uniform distribution of chemical elements prior to solidification into a composite heterogeneous weld bead.

**Composite heterogeneous weld bead** - a weld deposit resulting from solidification of a heterogeneous welding pool that produces at least two metallurgicaly bonded constituents such as in this case an interconnected framework of dendrites and an interdendritic eutectic matrix each with significantly different chemical composition, solidification range and physical properties.

**Aging temperature** - is a temperature at which a precipitation of secondary phases during heat treatment of metals and alloys from the oversaturated solid solution occurs.

**Buttering welding pass** - a surface preparation using a cladding fusion welding process that deposits surfacing metal on a base material to provide a metallurgicaly compatible weld metal deposit for the subsequent completion of the weld.

**Superalloy base materials** - are metallic materials that are used for a manufacturing of turbine engine components and other articles that exhibit excellent mechanical strength and resistance to creep (tendency of solid materials to slowly move or deform under stress) at high temperatures, up to 0.9 melting temperature; good surface stability, oxidation and corrosion resistance. Superalloys typically have a matrix with an austenitic face-centered cubic crystal structure. Superalloys are used mostly for manufacturing of turbine engine components.

**Composite Weld Structure** - heterogeneous structure comprises metallically bonded high temperature interconnected dendrite framework and eutectic matrix, wherein metal bonding arises from increased spatial extension of the valence metal atoms that brought close together during melting and solidification of a welding pool.

**Originally manufactured article** - an article which has never been subject to a repair.

### DESCRIPTION

Turbine blades of aero and industrial engines are manufactured of superalloys, directionally solidified and single crystal materials with a low ductility to ensure high rupture properties. However, low ductility reduces weldability of these materials due to limited capabilities of welds to accommodate residual stresses by plastic deformation.

To perform successful welding on materials having low ductility it is essential to minimize solidification stresses by reducing the melting temperature of filler materials, minimizing the depth of a penetration, overheating of a base material and increasing the solidification range of weld beads. This allows accommodation of solidification and thermal stresses by plastic deformation within weld beads.

The invented method addresses the cracking problem by the creation of self healing welds wherein cracks in the weld beads and in the HAZ adjacent to the fusion line are self healed during a post weld heat treatment. Additionally self healing also occurs during multi pass welding due to heat inputs of subsequent passes.

The invented method is disclosed using by way of example only the repair of turbine blades manufactured of Inconel 738.

Prior to the weld repair, turbine blades as well as other turbine engine components are subjected to a stripping of the protective coatings if any and descaling and cleaning in accordance with relevant Original Equipment Manufacture (OEM) standard procedures.

After cleaning, turbine blades are subjected to fluoro penetrant inspection (FPI) as per AMS2647 or ASTM DE1417 or OEM standards followed by a dimensional inspection.

Prior to welding the turbine blades manufactured of precipitation hardening polycrystalline superalloys such as Inconel 738 may also be subjected to a rejuvenation heat treatment or High Isostatic Pressure (HIP) treatment to restore rupture and fatigue life of parts and improve ability of a base material to withstand a welding.

For example, rejuvenation (solution) annealing of Inconel 738 is carried out at a temperature of 1190°C ± 10°C for 2 - 4 hours followed by a controlling cooling to reduce amount of y' - phase

After heat treatment, the damaged material from the repair area is removed mechanically by machining or manual grinding using a hand held rotary file and tungsten carbide burrs.

Defective material must be completely removed to ensure sound welds. Therefore, after machining the repair area is subjected to FPI to verify complete crack removal followed by degreasing using alkaline, acetone, methanol or steam cleaning.

The premixed composite welding powders may include 5-50% boron based brazing powders such as AWS A5.8 BNi-9 (further AWS BNi-9), AMS 4777 or silicon based braze AMS 4782 or silicon-boron based brazing powder Amdry 788, and a high temperature welding powder. The high temperature welding powder can have similar chemical composition as a base material or different from the base material chemical composition to produce more superior welds.

Composite welding powders comprised the high temperature welding powder Inconel 738, or dissimilar powders having superior oxidation resistance such as Mar M247, Rene 80, Rene 142 or custom made powders with brazing powders are prepared in advance or produced directly in the standard multi hoper powder feeder during cladding.

Selection of brazing and high temperature welding powders is based on service temperature, the stress - strain condition of the repair area and chemical composition of a base material.

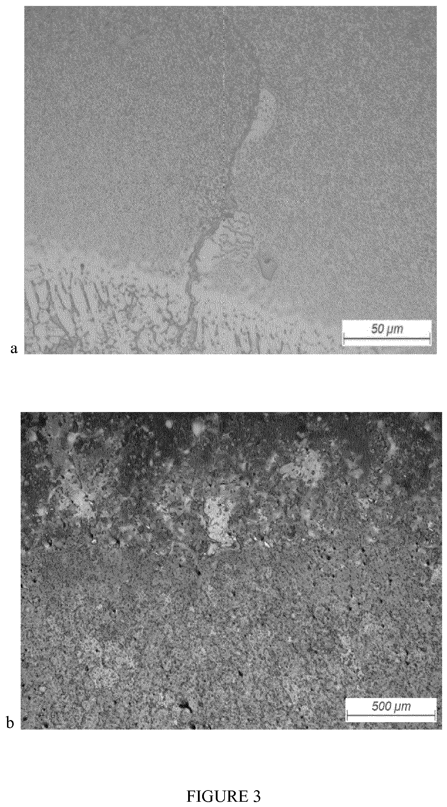

For example, for a repair of low pressure turbine blades that are exposed to moderate temperatures boron based brazing powders are the best choice. This is due to the ability of boron to diffuse easily into HAZ producing eutectics that heal micro cracks adjacent to the fusion zone by the formation of eutectics having lower than parent material melting temperatures. These eutectics metallurgically bond welds to the parent material creating unique structure shown in FIG. 3, b.

For relatively light turbine blades of aero engines that are exposed to hot and harsh conditions silicon based brazing powders such as AMS 4782 and others are more preferable because they have better oxidation resistance than boron based brazing materials.

High pressure turbines blades of heavy industrial engines that are exposed to high temperature and stresses might be repaired using silicon-boron based AWS BNi-10, BCo-1 or similar brazing powders.

The same approach could be used for selecting high temperature welding powders that can be produced of similar or dissimilar iron base, nickel base, cobalt base superalloys.

During cladding high temperature welding and brazing powders as well as the base material could be melted by numerous heat or welding sources such as laser or electron beam, arc and plasma.

Laser and micro plasma welding are currently the most advanced processes for the tip restoration of turbine blades. Therefore, these welding processes are discussed in more details. The heat input during welding is minimized while welding speed is maximized for reducing the depth of penetration, dilution, size of the welding pool, and solidification time.

The solidification and cooling of the welding pool produced using optimized welding parameters results in the formation of composite heterogeneous weld beads comprised of a continuous interconnected framework of dendrites produced by the high temperature welding powder and interdendritic eutectics formed by the brazing and welding powders and base material.

By experiment it was found that optimal conditions for the formation of composite heterogeneous weld beads were achieved in laser cladding with a ratio of length of the welding pool to welding speed from 0.002 to 0.02.

Melting of the substrate by laser beam with introduction into the weld pool the composite welding powder resulted in a fusion of all materials and formation of a metal bonding between clad welds and base material. The chemical composition of the first layer depends on the dilution and depth of penetration.

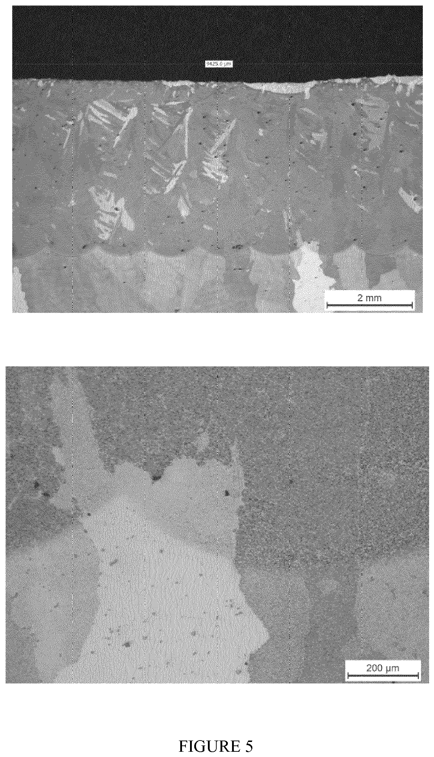

A columnar dendritic structure with epitaxial grown of dendrites perpendicular to the substrate is formed along the fusion zone during solidification of the welding pool. With solidification progress the growth direction of dendrites tilted into the weld direction resulting in the formation of equiaxed or prolonged grains oriented parallel to the substrate at the top section of clad welds. However, in multi pass cladding the top sections of welds were re-melted which resulted in the formation of the interconnected framework of dendrites throughout the entire clad welds starting from the base material as shown FIG. 5. This microstructure formed provided that optimal welding parameters were used.

High welding speed and solidification rate, low heat input, small length of weld pool and limited stirring of a liquid metal created non-equilibrium conditions for solidification. This results in the formation of composite heterogeneous weld beads wherein the boron and silicon rich eutectics segregated along dendrites and grain boundaries creating a matrix having superior ability to self heal cracks.

Healing of micro cracks in the HAZ with the liquid braze based matrix was also observed during welding. However, due to rapid solidification and cooling of the welding pool large cracks adjacent to the fusion line were not fully healed.

To fully heal all weld and HAZ cracks turbine blades were subjected to a post weld heat treatment (PWHT) at a temperature that exceeded a solidification temperature of a brazing powder but was below of the solidification temperature of high temperature welding powder resulting in partial re-melting of only the braze base matrix while the geometry of composite clad welds was supported by the continues framework of high temperature dendrites.

In accordance with another preferable embodiment the first stage of the PWHT is made within the solidus - liquidus range of welds that can be determined by the thermal diffusion analysis (DTA) of welds in advance or by series of experiments.

To prevent formation of voids during the PWHT, the braze based matrix has to be interconnected throughout the entire weld. Therefore, a selection of appropriate welding and brazing powders and optimization of welding parameters played a critical role in the self healing of cracks.

It was found that the invented process can be used to heal cracks up to 0.8 mm in width and up to 20 mm in length which has not being observed in any of prior arts.

Extended soaking time allowed diffusion of boron and to some extent silicon into the base material. Diffusion of boron was also observed into the dendrites produced by the high temperature welding powder resulting in a formation of eutectics in the HAZ of Inconel 738 that was accompanied by crack healing. We observed the elimination of all evidences of original cracking to a depth up to 1.8 mm as shown in FIG. 3, b.

Various weld repairs of turbine blades of industrial and aero turbine engine components as well as nozzle guide vanes (NGV) have been made using dissimilar welding materials. Therefore, the major purpose of the PWHT is to restore the original mechanical properties of the base material and perform stress relief maximizing mechanical properties of welds.

To complete the self healing of cracks after welding, Inconel 738 alloys were heat treated at a temperature of 1120 - 1220° C for two hours followed by an argon quench from a temperature of 980° C. This resulted in annealing of the base material, dissolution of gamma-prime and re-precipitation of carbides.

To restore the original mechanical properties of Inconel 738 base material a two stage PWHT at a temperature of 1120° C for four (4) hours followed by aging at a temperature of 845° C for sixteen (16) hours and argon quench was made.

It was observed that the typical microstructure of IN 738 after two stage aging comprised the cuboidal precipitation of gamma-prime in the austenitic matrix. Precipitation hardening with gamma-prime and carbides ensured high ultimate and yield strength of 49.4 KSI and 36.8 KSI respectively with an elongation of 15.5% and creep strength with a rupture time of 23.7 hours at stresses of 22 KSI and temperature of 982° C. Most grain boundaries after this heat treatment have had a serrated morphology contributing to extended blades rupture life.

Weld produced using the invented composite welding powders comprised an interconnected framework of high melting temperature dendrites and interdendritic nickel and cobalt based eutectic matrix enriched with boron (B - series), silicon (S - series) and boron and silicon (SB - series) that were subjected to a partial aging during the PWHT as well.

As a result, welds made with boron based brazing powder exhibited coarser grain boundary features and very fine cuboidal and spherical gamma-prime microstructure that was also typical for Inconel 738 in the aged condition.

Welds with silicon additives had much higher thermal stability. No evidences of recrystallization of primary austenitic grains and changing in morphology of dendrites were found. After two stage aging weld beads produced using Si based brazing powders had extremely fine cuboidal gamma-prime phase.

Welds with moderate amount of boron and silicon had transition microstructure. No evidences of cracking neither in the welds nor in the HAZ were found.

All three described types of brazing powders could be potentially used for welding on Inconel 738 turbine blades but welds produced using Si had the highest oxidation resistance as shown in Table 2, Example 9. Therefore, Si based brazing powders are most effective for a tip restoration of turbine blades while boron based brazing powders should be used for a weld repair of cracks in the blade platform.

After PWHT the repair area is subjected to machining or polishing for restoration of the original contour of the turbine blades.

Final FPI and/or radiographic inspection (X-ray) are made in accordance with relevant standards and specifications.

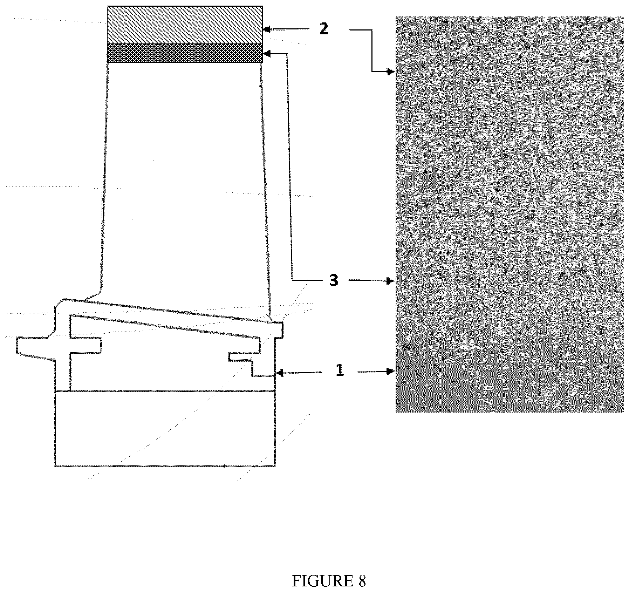

Typical drawing of the turbine blade that was repaired using the invented method and composite filler powder is shown in FIG. 8.

This blade comprised the original defect free section of the base material (1), in this case Inconel 738, and the repaired section (2) that was produced by a multi pass laser cladding and PWHT.

As a result, the repaired section of the blade includes an interconnected dendritic framework produced by the high temperature welding powder and braze based matrix that produced coalescence with the base material through the crack free eutectic layer (3) in the HAZ.

To demonstrate the capabilities of the invented method and composite welding powders for a repair of engine components multi pass cladding was made on Inconel 738, Mar M002, Inconel 625, Rene N5 and austenitic stainless steel 304 base materials.

Automatic laser beam cladding was made using a Liburdi LAWS 1000 laser welding system equipped with the 1 kW laser.

Automatic microplasma (MPW) welding was made using a Liburdi LAWS 4000 system. Manual GTAW-MA welding was made using a Liburdi PulsWeld 100 power source and standard welding torch. Results of experiments are discussed below in Examples 1 through 9.

### EXAMPLE 1

Three (3) passes automatic microplasma pulsed cladding was made at an ambient temperature using filler material comprised of 70% Mar M247 high temperature filler and 30% AWS BNi-9 brazing powders on the Inconel 738 substrate of 0.060-0.070 inch in width.

Following below parameters were used:
Traveling (welding) speed - 5.08 cm/min (2 ipm = inch per minute)
Powder feed rate - 3 g/min
Max Weld Current - 21.8 A
Min Weld Current - 15.6 A
Duty Cycle - 60%
Frequency - 3 Hz
Shielding Gas - argon
Pilot arc gas - argon

Welded samples were subjected to a post weld heat treatment in vacuum with a pressure below of 10⁻⁴ torr at a temperature of 1120° ± 10°C for two (2) hours. At this temperature the material of the clad welds was in a solid - liquid condition that allowed self healing of micro cracks in clad welds and the formation of eutectic alloy along the fusion line resulting in a healing of micro cracks.

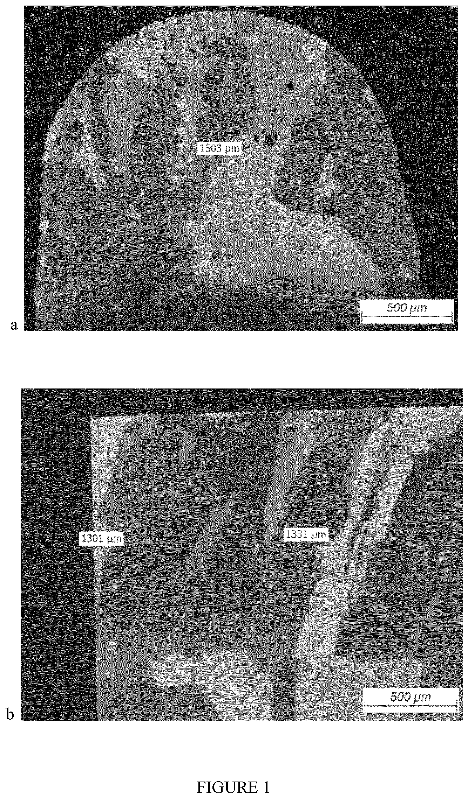

No cracks were observed in clad welds and HAZ. Typical micrographs of samples are shown in FIG. 1a and 1b.

### EXAMPLE 2

Three (3) passes laser cladding was made at an ambient temperature using filler material comprised of 75% Inconel 738 high temperature filler and 25% AWS BNi-9 brazing powders on the Inconel 738 substrate of 0.2032-0.2286 cm (0.080-0.090 inch) in width at an ambient temperature.

To produce clad welds of 0.2286-0.2540 cm (0.090-0.100 inch) in width the laser welding head was oscillated perpendicular to the welding direction.

To minimize overheating of the substrate during the first pass and ensure good fusion between passes the laser beam power was incrementally increased from the first pass to the top (last) one.

Following below welding parameters were used:
Welding speed - 9,65 cm/min (3.8 ipm)
Powder feed rate - 6 g/min
Oscillation speed (across weld samples) - 114.3 cm/min (45 ipm)
Oscillation distance - 0.084 cm (0.033 inch) either side of the center line of the sample
Beam power: 325 W (first pass), 350 W (second pass), 400 W (third pass)
Carrier gas - argon
Shielding gas - argon
After welding samples were cut in two equal parts.

One part was subject to a metallographic evaluation in as welded condition. We observed self healing of microcracks in the HAZ during laser welding by melted filler material that was sucked from the welding puddle by the capillary action into cracks is shown in FIG. 3 a. The second part of the sample was subjected to a post weld heat treatment in vacuum with a pressure below of 10⁻⁴ torr at a temperature of 1200° ± 10°C for two (2) hours. At this temperature the material of the clad welds was in a solid - liquid condition that allowed self healing of micro cracks in welds. We observed formation of the eutectic alloy along the fusion line that eliminated all evidences of original HAZ micro cracking as shown in FIG. 3 b.

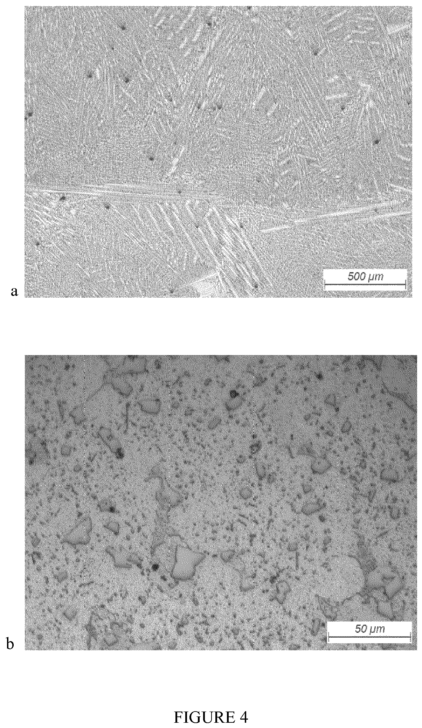

The post weld heat treatment resulted also in a decomposition of oversaturated solid solution, precipitation of boron-rich particles as shown in FIG. 4 and reduction of microhardness of clad welds to a level of the parent material as shown in the Table 1 below that confirmed the feasibility of using the invented methods for a repair structural engine components:

**Table 1 - Microhardness of clad welds**

| **Material** | **In "As Welded" Condition, HV** | **After Heat Treatment, HV** |
|---|---|---|
| Parent Material | 427 | 419 |
| HAZ | 425 | 418 |
| Diffusion Zone | N/A | 433 |
| Clad Weld Pass 1 | 554 | 445 |
| Clad Weld Pass 2 | 581 | 481 |
| Clad Weld Pass 3 | 573 | 407 |

### EXAMPLE 3

Three (3) passes laser cladding was made at an ambient temperature using filler powder comprised of 73% Inconel 738 high temperature filler and 27% AWS BNi-9 brazing powders on the Mar 002 substrate of 0.2032-0.2286 cm (0.080-0.090 inch) in width.

To produce clad welds of 0.2286-0.2540 cm (0.090-0.100 inch) in width the laser head was oscillated perpendicular to the welding direction.

Following below welding parameters were used:
Welding speed - 9,65 cm/min (3.8 ipm)
Powder feed rate - 8 g/min
Oscillation speed (across weld samples) - 114.3 cm/min (45 ipm)
Oscillation distance - 0.084 cm (0.033 inch) either side of the center line of the sample
Beam power: 475 W for all three passes
Carrier gas - argon
Shielding gas - argon

Welded samples were subjected to a post weld heat treatment in vacuum with a pressure below of 10⁻⁴ torr at a temperature of 1200° ± 10°C for two (2) hours. At this temperature the material of the clad welds was in a solid - liquid condition that allowed self healing of micro cracks in the welds. We observed the formation of the eutectoid alloy along the fusion line and healing micro cracks in the HAZ as it was confirmed by FPI and metallographic evaluation.

Inconel 738 - AWS BNi-9 filler material combines acceptable oxidation resistance and high mechanical properties due to ability of excessive boron to diffuse into the parent material. Therefore, this material is most suitable for the repair of structural components, such as casings, nozzle guide vanes (NGV) and turbine blades of land based industrial engines.

### EXAMPLE 4

Three (3) pass laser cladding was made at an ambient temperature using filler powder comprised of 75% Inconel 738 high temperature filler and 25% AMS 4782 silicon based brazing powders on the Inconel 738 substrate of 0.203-0.229 cm (0.080-0.090 inch) in width.

To produce clad welds of 0.254- 0.305 cm (0.100-0.120 inch) in width the laser welding head was oscillated perpendicular to the welding direction.

Following below welding parameters were used:
Welding speed - 9,65 cm/min (3.8 ipm)
Powder feed rate - 8 g/min
Oscillation speed (across weld samples) - 114.3 cm/min (45 ipm)
Oscillation distance - 0.084 cm (0.033 inch) either side of the center line of the sample
Beam power: 475 W for all passes
Carrier gas - argon
Shielding gas - argon

Welded samples were subjected to a post weld heat treatment in vacuum with a pressure below of 10⁻⁴ torr at a temperature of 1120° ± 10°C for two (2) hours. At this temperature the material of the clad welds was in solid - liquid condition producing healing of micro cracks.

FPI and metallographic evaluation confirmed that samples were free of cracks. A typical micrograph of a sample is shown in FIG. 5.

Silicon significantly increases oxidation resistances of clad welds in comparison with parent material and boron based brazing materials. Inconel 738 - AMS4782 composition is most prominent for a relatively shallow tip restoration of aero turbine blades.

### EXAMPLE 5

Evaluation of clad welds produced using 50% Mar M247 filler and 50% AMS4782 brazing powders was made for axial crack repair and tip restoration of turbine blades manufactured of standard polycrystalline and single crystal alloys.

Three (3) pass laser cladding was made on Inconel 738 substrate of 0.203-0.229 cm (0.080-0.090 inch) in width at an ambient temperature.

To produce a weld of 0.254- 0.305 cm (0.100-0.120 inch) in width the laser welding head was oscillated across the sample.

Following below welding parameters were used:
Welding speed - 9,65 cm/min (3.8 ipm)
Powder feed rate - 6 g/min
Oscillation speed (across weld samples) - 114.3 cm/min (45 ipm)
Oscillation distance - 0.084 cm (0.033 inch) either side of the center line of the sample
Beam power: 475 W for all three passes
Carrier gas - argon
Shielding gas - argon
Fiber Diameter - 800 µm
Filler powder diameter - 45 - 75µm

Welded samples were subjected to a post weld heat treatment in vacuum with a pressure below of 10⁻⁴ torr at a temperature of 1220° ± 10°C for two (2) hours.

Metallographic evaluation confirmed that samples have met relevant acceptance standards.

### EXAMPLE 6

To perform evaluation of crack resistance of clad welds with minimum amount of brazing powder laser clad welding was made at an ambient temperature on Mar M 002 substrate using 95% Rene 142 high temperature welding powder and AWS BNi-9 brazing powder to simulate repair of directionally solidified and single crystal blades and NGV.

Width of samples varied from 0.203-0.254 cm (0.080-0.100 inch).

To produce clad welds of 0.203-0.254 cm (0.080-0.100 inch). in width the laser welding head was oscillated perpendicular to a weld direction.

Following below welding parameters were used:
Welding speed - 9,65 cm/min (3.8 ipm)
Powder feed rate - 8 g/min
Oscillation speed (across weld samples) - 114.3 cm/min (45 ipm)
Oscillation distance - 0.102 cm (0.040 inch) either side of the center line of the sample
Beam power: 475 W for all three passes
Carrier gas - argon
Shielding gas - argon

Welded samples were subjected to a post weld stress relief in vacuum below of 10⁻⁴ torr at a temperature of 885° ± 10°C for two (2) hours. At this temperature the material of the clad welds were in a solid condition.

Microstructure evaluation did not reveal any indications that exceeded relevant acceptable limits.

### EXAMPLE 7

To simulate extensive repair of casing and other structural components manufactured of Inconel 625 superalloy at an ambient temperature the multi pass laser cladding of 1.905-2.8 cm (0.750-1.1 inch) in height was made using the filler material comprised of 75% Inconel 738 and 25% AWS BNi-9 powders using following below parameters:
Welding speed - 9,65 cm/min (3.8 ipm)
Powder feed rate - 8 g/min
Oscillation speed (across weld samples) - 114.3 cm/min (45 ipm)
Oscillation distance - 0.102 cm (0.040 inch) either side of the center line of the sample
Beam power: 475 W for all three passes
Carrier gas - argon
Shielding gas - argon

To reduce the residual stresses and prevent cracking, after weld build up of 0.635-1.270 cm (0.250 -0.500 inch) in height samples were subjected to a post weld heat treatment in vacuum with a pressure below of 10⁻⁴ torr at a temperature of 1200° ± 10°C for two (2) hours. At this temperature the material of the clad welds was in a solid - liquid condition that allowed self healing of micro cracks in clad welds. We observed the formation of a diffusion layer and recrystallization of a parent material along the fusion line and stress relief.

Post heat treatment the laser cladding process was continued using the same welding parameters until reaching the required weld build up followed by another heat treatment cycle at a temperature of 1200° ± 10°C for two (2) hours.

After the second heat treatment cycle, the weld build up remained practically at the same geometry with minor reduction in thickness of less than 5%.

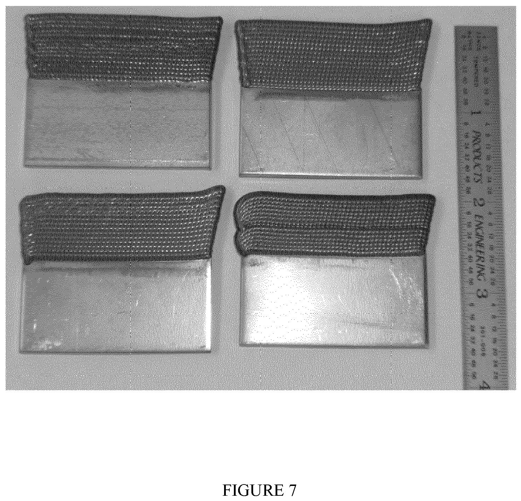

No cracks were found in clad welds and HAZ. Samples with clad welds are shown in FIG. 7.

### EXAMPLE 8

Three (3) pass automatic microplasma pulsed cladding was made using filler material comprised of 70% Inconel 738 and 30% AWS BCo-1 brazing powders on Inconel 738 substrate of 0.152-0.178 cm (0.060-0.070 inch) in width at an ambient temperature.

Following below parameters were used:
Welding speed - 5.04 cm/min (2 ipm)
Powder feed rate - 2.6 g/min
Max Weld Current - 22 A
Min Weld Current - 15 A
Duty Cycle - 60%
Frequency - 3 Hz
Shielding Gas - 95%Ar - 5%H₂
Pilot arc gas - argon

Welded samples were subjected to a post weld heat treatment in vacuum with a pressure below of 10⁻⁴ torr at a temperature of 1220° ± 10°C for two (2) hours. At this temperature the material of clad welds was in a solid - liquid condition that allowed self healing of micro cracks in clad welds. We observed formation of a diffusion layer and recrystallization of a parent material along the fusion line and healing of microcracks. No cracks were found in the clad welds and in the HAZ.

### EXAMPLE 9

To evaluate mechanical properties of multi pass laser clad welds produced on the sacrificial base material, which was fully removed and discarded after welding, following below powders were used:
High temperature welding powder consisting of in wt. % the below chemical elements:
Co 9 - 15%;
Al 3-6.5%;
C 0.1-0.2%;
Ti, Zr and Hf with a total content from 1 to 8.5%;
Ta and Nb with a total content from 0.5 to 8.5%;
W and Mo with a total content from 7 to 20 %;
Cr and Re with a total content from 6.5 to 18.5 %;
Fe and Mn with a total content from 0.1 to 1 %;
Ni and impurities to balance.

Braze Compositions:
Composition 1 of the boron based brazing powder (further Braze 1) comprised (in wt. %): Ni-20%Co -20%Cr-3%Ta-3%B-0.1La
Composition 2 of the silicon based brazing powder (further Braze 2) comprised (in wt. %): Ni-19%Cr-10%Si
Composition 3 of boron and silicon containing brazing powder (further Braze 3) comprised (in wt. %):
   Co-22%Cr-21%Ni-14%W-2%B-2%Si-0.03%La
   Content of the brazing material varied from 5 to 50% as shown in Table 2.

To produce weld buildup of 12.7 x 5 x 0.305 cm (5 x 2 x 0.120 inch) in size laser cladding was used.

PWHT of welds was made in a vacuum of 0.5·10⁻⁴ torr at a temperature of 1205° ± 10°C followed by two stage aging heat treatment at a temperature of 1120° ± 10°C for two (2) hours 845° C for sixteen (16) hours and argon quench to compare mechanical properties of welds with Inconel 738 base material.

Tensile testing of welds was made at a temperature of 982° C as per ASTM E21.

The accelerated cyclic oxidation test was made in air at a maximum temperature of 1100° C followed by air cooling to an ambient temperature.

As followed from the Table 2 welds produced using boron based brazing powder with the Composition 1 demonstrated superior mechanical properties and exceptional ductility that exceeded mechanical properties of Inconel 738 and standard welding materials Inconel 625 and Haynes 230 that have being used for a repair of turbine blades at a temperature of 980° C. However, boron additives reduce oxidation resistance at a temperature of 1100° C as shown in Table 3.

Mechanical properties of welds produced silicon based brazing powder with the Composition 2 had a superior oxidation resistance that exceeded the oxidation resistance of Rene 80 and Rene 142 welds and moderate mechanical properties.

Welds produced using B and Si containing brazing powder with the Composition 3 have had mechanical properties that were between welds comprised of only B and Si.

**Table 2 - Mechanical Properties of Laser Clad Welds in Comparison with Properties of Inconel 738 and some Standard Superalloys at a Temperature of 982° C**

| Material | UTS, KSI | Elongation, % |
|---|---|---|
| Clad weld | | |
| WP + 25% of Braze Composition 1 | 64.8 | 19.5 |
| WP + 15% of Braze Composition 1 | 60.8 | 16 |
| WP + 10% of Braze Composition 1 | 67.1 | 18.4 |
| WP + 5% of Braze Composition 1 | 63.3 | 12.4 |
| WP + 35% of Braze Composition 2 | 35.3 | 15.1 |
| WP + 50% of Braze Composition 3 | 44 | 18.8 |

| Standard Superalloys and Welding Materials | | |
|---|---|---|
| Inconel 738 | 49.4 | 15.5 |
| Haynes 230 | 29.4 | 24.8 |
| Inconel 625 | 24.1 | 45.9 |

**Table 3 - Cyclic Oxidation Resistance of Welds and Inconel 738**

| Materials | WP + 25% of Braze Composition 1 | WP + 35% of Braze Composition n 2 | WP + 50% of Braze Composition 3 | IN748 (Base Mater.) | René 80 (Base Mater.) | Rene 142 (Base Mater.) |
|---|---|---|---|---|---|---|
| Weight Change, g/cm³ | -0.1338 | -0.0025 | -0.2249 | -0.0426 | -0.0936 | -0.0178 |

Therefore, as it was discussed above, boron based brazing powders preferably should be used for a weld repair and manufacturing of structural engine components that exercise high stresses during service and have protective aluminizing or platinum-aluminizing coatings. Silicon based brazing powders preferably should be used for tip restoration of turbine blades where the high oxidation resistance and ductility of welds is much more critical than rupture properties.

## Claims

1. A method of cladding and fusion welding of superalloys comprises the steps of:
a. application of a composite filler powder that comprises 5-50% by weight brazing powder which includes melting point depressants which includes boron in the amount of 0.2 to 4 wt%, and 50-95% by weight high temperature welding powder, to a superalloy base material;
b. simultaneous heating of the base material and the composite filler powder by a welding heat source that is movable relative to the base material, to a temperature that fully melts the brazing powder and at least partially melts the high temperature welding powder and also melts a surface layer of the base material, thereby forming a welding pool;
c. cooling of the welding pool such that upon solidification and cooling, a heterogeneous weld bead is formed which is a composite structure that comprises an interconnected framework of high melting temperature columnar dendrites produced by the high temperature welding powder and an interdendritic eutectic matrix in the weld bead is formed by the brazing powder and the welding powder and the base material, and
d. post weld heat treatment at a temperature exceeding a solidus temperature of the brazing powder and below the solidus temperature of the high temperature welding powder, that results in at least a partial re-melting of the eutectic that is adapted to self healing by filling of cracks up to 0.8 mm in width and up to 20 mm in length, in the weld bead and the base material by capillary action followed by cooling and consolidation of the weld bead.

2. Method of cladding and fusion welding as per claim 1, wherein the ratio of the length of the welding pool in mm to the welding speed in mm/minute is selected to fall between 0.002 - 0.02.

3. Method of cladding and fusion welding as per claim 1, wherein the brazing powder is fully melted while the high temperature welding powder is heated to a temperature below its liquidus temperature.

4. Method of cladding and fusion welding as per claim 1, wherein the composite filler powder is heated during welding by the heat source to a temperature exceeding the melting temperature of the brazing powder but below 1.2 times the melting temperature of the high temperature welding powder.

5. Method of cladding and fusion welding as per claim 3, wherein the composite filler powder is heated during welding by the heat source to a temperature exceeding the melting temperature of the brazing powder but below 1.2 times the melting temperature of the high temperature welding powder.

6. Method of cladding and fusion welding as per claim 1, wherein the high temperature welding powder consists of in wt. % the following chemical elements:
Co 9 - 15%;
Al 3 - 6.5%;
C 0.1 - 0.2%;
Ti, Zr and Hf with a total content from 1 to 8.5%;
Ta and Nb with a total content from 0.5 to 8.5%;
W and Mo with a total content from 7 to 20 %;
Cr and Re with a total content from 6.5 to 18.5 %;
Fe and Mn with a total content from 0.1 to 1 %;
Ni and impurities to balance.

7. Method of cladding and fusion welding as per claim 1 wherein the post weld heat treatment includes an additional second step of an aging heat temperature of the base material.

8. Method of cladding and fusion welding as per claim 1, wherein the melting point depressant in the brazing powder further consists of Si in the amount of 1 to 10 weight % of the brazing powder.

9. Method of cladding and fusion welding as per claim 1, wherein the melting point depressant in the brazing powder consists of a preselected mixture B and Si in the amount of 1.2 to 10 weight % of the brazing powder wherein the B content remains less than 4 weight %.

## Patentansprüche

1. Ein Verfahren zum Verkleiden und Schmelzschweißen von Superlegierungen umfasst die Schritte:
a. Auftragen eines Verbundfüllpulvers, das zu 5 - 50 Gew. % Hartlötpulver umfasst, das Schmelzpunktsenkungsmittel umfasst, die zu 0,2 - 4 Gew. % Bor und zu 50 - 95 Gew. % Hochtemperatur-Schweißpulver umfassen, auf einen Grundwerkstoff einer Superlegierung;
b. gleichzeitiges Heizen des Grundwerkstoffs und des Verbundfüllpulvers durch eine Schweißwärmequelle, die in Bezug auf den Grundwerkstoff bewegbar ist, auf eine Temperatur, bei der das Hartlötpulver vollständig und das Hochtemperatur-Schweißpulver mindestens teilweise aufgeschmolzen werden und auch eine Oberflächenschicht des Grundwerkstoffs aufgeschmolzen wird, wodurch ein Schmelzbad gebildet wird;
c. Kühlen des Schweißbades, sodass bei Verfestigung und Kühlung eine heterogene Schweißraupe gebildet wird, bei der es sich um eine Verbundstruktur handelt, umfassend einen vernetzten Rahmen aus hochschmelzenden säulenförmigen Dendriten, die durch das Hochtemperatur-Schweißpulver erzeugt werden, und eine interdendritische eutektische Grundmasse durch das Hartlötpulver, das Schweißpulver und den Grundwerkstoff gebildet wird; und
d. Schweißnachbehandlung bei einer Temperatur, die eine Solidustemperatur des Hartlötpulvers überschreitet und die Solidustemperatur des Hochtemperatur-Schweißpulvers unterschreitet, was zu einem mindestens teilweisen Wiederaufschmelzen der eutektischen Grundmasse führt, die zur Selbstheilung durch Einfüllen von Rissen bis zu einer Breite von 0,8 mm und einer Länge von 20 mm in Schweißraupe und Grundwerkstoff durch Kapillarwirkung geeignet ist, gefolgt durch Kühlen und Verfestigen der Schweißraupe.

2. Verfahren nach Anspruch 1, wobei das Verhältnis der Länge des Schwelzbades in mm zur Schweißgeschwindigkeit in mm/min zwischen 0,002 und 0,02 gewählt ist.

3. Verfahren nach Anspruch 1, wobei das Hartlötpulver vollständig geschmolzen wird, während das Hochtemperatur-Schweißpulver auf eine Temperatur unterhalb seiner Liquidustemperatur erwärmt wird.

4. Verfahren nach Anspruch 1, wobei das Verbundfüllpulver beim Schweißen durch die Wärmequelle auf eine Temperatur erwärmt wird, die die Schmelztemperatur des Hartlötpulvers übersteigt aber weniger als ein 1,2-Faches der Schmelztemperatur des Hochtemperatur-Schweißpulvers beträgt.

5. Verfahren nach Anspruch 3, wobei das Verbundfüllpulver beim Schweißen durch die Wärmequelle auf eine Temperatur erwärmt wird, die die Schmelztemperatur des Hartlötpulvers übersteigt aber weniger als ein 1,2-Faches der Schmelztemperatur des Hochtemperatur-Schweißpulvers beträgt.

6. Verfahren nach Anspruch 1, wobei das Hochtemperatur-Schweißpulver in Gew. % aus folgenden chemischen Elementen besteht:
Co 9 - 15%;
AI 3 - 6,5%;
C 0,1 - 0,2%;
Ti, Zr und Hf mit einem Gesamtgehalt von 1 - 8,5 %;
Ta und Nb mit einem Gesamtgehalt von 0,5 - 8,5 %;
W und Mo mit einem Gesamtgehalt von 7 - 20 %;
Cr und Re mit einem Gesamtgehalt von 6,5 - 18,5 %;
Fe und Mn mit einem Gesamtgehalt von 0,1 - 1 %;
i.Ü. aus Ni und Fremdstoffen.

7. Verfahren nach Anspruch 1, wobei die Schweißnachbehandlung einen zusätzlichen zweiten Schritt einer Wärmealterungstemperatur des Grundwerkstoffs umfasst.

8. Verfahren nach Anspruch 1, wobei das Schmelzpunktsenkungsmittel im Hartlötpulver bezogen auf das Gewicht des Hartlötpulvers ferner zu 1 - 10 Gew. % aus Si besteht.

9. Verfahren nach Anspruch 1, wobei das Schmelzpunktsenkungsmittel im Hartlötpulver bezogen auf das Gewicht des Hartlötpulvers zu 1,2 - 10 Gew. % aus einer vorausgewählten Mischung aus B und Si besteht, wobei der B-Gehalt unterhalb von 4 Gew. % bleibt.

## Revendications

1. Procédé de rechargement et de soudage par fusion de superalliages comprenant les étapes de :
a. application d'une poudre d'apport composite qui comprend de 5 à 50 % en poids de poudre de brasage qui inclut des éléments réduisant le point de fusion qui inclut du bore en la quantité de 0,2 à 4 % en poids, et de 50 à 95 % en poids de poudre de soudage à haute température, sur un matériau de base de superalliage ;
b. chauffage simultané du matériau de base et de la poudre d'apport composite par une source de chaleur de soudage qui est mobile par rapport au matériau de base, à une température qui permet de faire fondre entièrement la poudre de brasage et de faire fondre au moins partiellement la poudre de soudage à haute température et qui permet également de faire fondre une couche de surface du matériau de base, formant ainsi un bain de fusion ;
c. refroidissement du bain de fusion de telle manière que lors de la solidification et du refroidissement, un cordon de soudure hétérogène est formé qui est une structure composite qui comprend un édifice interconnecté de dendrites en colonnes à haute température de fusion produites par la poudre de soudage à haute température et une matrice eutectique interdendritique dans le cordon de soudure est formée par la poudre de brasage et la poudre de soudage et le matériau de base, et
d. traitement thermique post-soudage à une température dépassant une température de solidus de la poudre de brasage et en dessous de la température de solidus de la poudre de soudage à haute température, qui conduit à une refusion au moins partielle de l'eutectique qui est adaptée à l'autoréparation par remplissage des fissures jusqu'à 0,8 mm de largeur et jusqu'à 20 mm de longueur, dans le cordon de soudure et le matériau de base par action capillaire, suivi du refroidissement et de la consolidation du cordon de soudure.

2. Procédé de rechargement et de soudage par fusion selon la revendication 1, dans lequel le rapport de la longueur du bain de fusion en mm à la vitesse de soudage en mm/minute est choisi de façon à se situer entre 0,002 à 0,02.

3. Procédé de rechargement et de soudage par fusion selon la revendication 1, dans lequel la poudre de brasage est entièrement fondue tandis que la poudre de soudage à haute température est chauffée à une température en dessous de sa température de liquidus.

4. Procédé de rechargement et de soudage par fusion selon la revendication 1, dans lequel la poudre d'apport composite est chauffée durant le soudage par la source de chaleur à une température dépassant la température de fusion de la poudre de brasage mais en dessous de 1,2 fois la température de fusion de la poudre de soudage à haute température.

5. Procédé de rechargement et de soudage par fusion selon la revendication 3, dans lequel la poudre d'apport composite est chauffée durant le soudage par la source de chaleur à une température dépassant la température de fusion de la poudre de brasage mais en dessous de 1,2 fois la température de fusion de la poudre de soudage à haute température.

6. Procédé de rechargement et de soudage par fusion selon la revendication 1, dans lequel la poudre de soudage à haute température est constituée, en % en poids, des éléments chimiques suivants :
Co 9-15%;
Al 3 - 6,5 % ;
C 0,1 - 0,2 % ;
Ti, Zr et Hf en une teneur totale de 1 à 8,5 % ;
Ta et Nb en une teneur totale de 0,5 à 8,5 % ;
W et Mo en une teneur totale de 7 à 20 % ;
Cr et Re en une teneur totale de 6,5 à 18,5 % ;
Fe et Mn en une teneur totale de 0,1 à 1
reste constitué de Ni et d'impuretés.

7. Procédé de rechargement et de soudage par fusion selon la revendication 1 dans lequel le traitement thermique post-soudage inclut une seconde étape additionnelle de traitement thermique de vieillissement du matériau de base.

8. Procédé de rechargement et de soudage par fusion selon la revendication 1, dans lequel l'élément réduisant le point de fusion dans la poudre de brasage est en outre constitué de Si en la quantité de 1 à 10 % en poids de la poudre de brasage.

9. Procédé de rechargement et de soudage par fusion selon la revendication 1, dans lequel l'élément réduisant le point de fusion dans la poudre de brasage est constitué d'un mélange présélectionné B et de Si en la quantité de 1,2 à 10 % en poids de la poudre de brasage dans lequel la teneur en B reste inférieure à 4 % en poids.
